# EUROPÄISCHE PATENTSCHRIFT

(11) **EP 2 017 796 B1**
(45) Veröffentlichungstag und Bekanntmachung des Hinweises auf die Patenterteilung: **13.01.2010**
(21) Anmeldenummer: 07013930.8
(22) Anmeldetag: 17.07.2007
(51) Int. Cl.: G07C 9/02, G06K 19/10

(54) **Zugangskontrollsystem**
Access control system
Système de contrôle d'accès

(43) Veröffentlichungstag der Anmeldung: 21.01.2009
(73) Patentinhaber: SkiData AG, 5083 Grödig/Salzburg (AT)
(72) Erfinder: Ponert Gregor, 5020 Salzburg (AT); Lippert Johannes, 5083 Grödig/Salzburg (AT)
(74) Vertreter: Berngruber, Otto

(56) Entgegenhaltungen:
- WO-A-02/13130
- WO-A1-2004/045864
- AT-B- 389 953
- US-A1- 2002 043 562
- US-A1- 2002 138 770

## Beschreibung

Die Erfindung bezieht sich auf ein Zugangskontrollsystem nach dem Oberbegriff des Anspruchs 1.

Aus AT-B-389953 ist ein System nach dem Oberbegriff des Anspruchs 1 bekannt.

Für Zugangskontrollsysteme werden häufig maschinenlesbare Berechtigungskarten verwendet, insbesondere Barcode,-Magnet- und Chipkarten. Während Chipkarten verhältnismäßig fälschungsicher sind, lassen sich Barcodekarten und Magnetkarten um so leichter duplizieren. So kann eine Barcodekarte mit jedem Kopiergerät kopiert und eine Magnetkarte mit einem Magnetkartenschreibgerät, das im Handel preiswert erhältlich ist, leicht gefälscht werden.

Aus WO-A-2004/04586 wird ein Sicherheitspapier bekannt, wobei eine Markierung für das bloße Auge nur sichtbar ist, wenn sie mit UV licht bestrahlt wird.

Aufgabe der Erfindung ist es daher, den Missbrauch von Berechtigungskarten mit maschinenlesbaren Zugangsberechtigungsdaten, insbesondere von Barcode- und Magnetkarten zu unterbinden.

Dies wird erfindungsgemäß dadurch erreicht, dass die Berechtigungskarte zur Authentifizierung mit einer Markierung versehen ist, die zwar nicht für das bloße Auge erkennbar, jedoch mit einem Detektor erfassbar ist, der in dem Kartenkontrollgerät angeordnet ist, das auch die Leseeinrichtung aufweist, mit der die Zugangsberechtigungsdaten von der Berechtigungskarte gelesen werden. Statt eines Detektors können auch mehrere Detektoren vorgesehen sein.

Dabei steuert das Kartenkontrollgerät die Zugangskontrollvorrichtung nur dann an, um den Zugang freizugeben, wenn sowohl mit der Leseeinrichtung eine gültige Zugangsberechtigung aus der Berechtigungskarte ausgelesen und zugleich mit dem wenigstens einen Detektor eine gültige Markierung auf der Berechtigungskarte festgestellt worden ist.

Alternativ kann die Zugangskontrollvorrichtung in ihrer Grundstellung den Zugang freigeben, ihn jedoch sperren, wenn die Leseeinrichtung keine gültige Zugangsberechtigung aus der Berechtigungskarte ausliest und/oder mit dem Detektor keine gültige Markierung auf der Berechtigungskarte festgestellt worden ist.

Das Kartenkontrollgerät ist vorzugsweise als Einsteckleser ausgebildet, d. h. es weist ein Gehäuse mit einer schlitzförmigen Einstecköffnung zum Einstecken der Berechtigungskarte auf. Zur Führung der Berechtigungskarte in dem Gehäuse können beiderseits der Karte Führungsnuten vorgesehen sein, in die die Karte mit ihren beiden Längskanten eingreift.

Die Lesevorrichtung wird durch einen Lesekopf in dem Gehäuse des Kartenkontrollgerätes gebildet, der die Karte nach dem Einschieben in die schlitzförmige Einstecköffnung liest. Dabei kann der Lesekopf die Karte lesen, wenn sie bis zu einem Anschlag in dem Gehäuse eingeschoben worden ist, oder während des Einschiebens und/oder Herausziehens der Karte. Der Lesekopf kann beispielsweise ein Barcode-oder ein Magnetlesekopf sein.

Das Kartenkontrollgerät kann auch eine Transportvorrichtung enthalten, die die in die schlitzförmige Einstecköffnung gesteckte Karte einzieht und gegebenenfalls nach dem Lesen zur Überprüfung der Zugangsberechtigungsdaten zurück zur Einstecköffnung bewegt, um sie aus der Einstecköffnung ziehen zu können.

Die Zugangskontrollvorrichtung kann beispielsweise eine mechanische Sperre, insbesondere eine Drehsperre sein, die einen Aktuator aufweist, der von dem Kartenkontrollgerät angesteuert wird, aber auch beispielsweise eine Ampel oder dergleichen optische oder akustische Anzeige, die anzeigt, ob sich die Zugangskontrollvorrichtung in der Freigabe-oder Sperrposition befindet. Die Zugangskontrollvorrichtung kann eine Personenvereinzelungsvorrichtung sein, aber z. B. auch die Zufahrt von Kraftfahrzeugen z. B. zu einer Parkeinrichtung kontrollieren.

Die mit bloßem Auge nicht erkennbare Markierung wird vorzugsweise durch ein Farbmittel gebildet, das auf die Berechtigungskarte aufgetragen ist. Dabei wird vorzugsweise ein luminiszierendes Farbmittel verwendet, das Licht im sichtbaren Bereich dann aussendet, wenn es mit einer Lichtquelle bestrahlt wird, die Licht außerhalb des sichtbaren Längenbereichs von etwa 400 bis 700 nm abgibt. Das von der Markierung beim Bestrahlen mit der Lichtquelle emittierte sichtbare Licht wird dann von dem Detektor erfasst.

Wenn das Farbmittel bei der Bestrahlung mit der Lichtquelle nur ein Licht eines Teils des sichtbaren Wellenlängenbereichs, also nur eine bestimmte Farbe oder einen bestimmten Farbton emittiert, kann der Detektor so ausgebildet sein, dass er nur ein Licht diese Farbe oder diesen Farbton erfasst. Auch ist es möglich, ein Farbmittel einzusetzen, das bei Bestrahlung ein Lichtspektrum mit zwei oder mehreren Maxima im sichtbaren Lichtwellenbereich aussendet. Das Kartenkontrollgerät kann dann so ausgebildet sein, dass eine gültige Markierung nur dann vorliegt, wenn der Detektor Licht mit diesen Maxima entsprechende Wellenlängen erfasst.

Die Markierung kann auch auf mehrere Bereiche der Berechtigungskarten verteilt sein. Die Bereiche können eine unterschiedliche Größe aufweisen, sodass sie bei gleicher Farbmittelkonzentration Licht unterschiedlicher Intensität emittieren. Zusätzlich oder statt dessen kann sich die Konzentration des Farbmittels in den einzelnen Bereichen ändern, um eine unterschiedliche Strahlungsintensität zu erzeugen.

Auf diese Weise kann die Markierung ein Muster mit unterschiedlichen Strahlungsintensitäten auf der Karte bilden, das von dem wenigstens einen Detektor erfasst wird. Das vom Detektor erfasste Muster kann dann mit einem in einem Speicher abgelegten Muster abgeglichen werden, wobei die Zugangskontrollvorrichtung den Zugang nur bei Übereinstimmung des mit dem Detektor erfassten und des abgelegten Musters freigibt. Wenn das Kartenkontrollgerät durch einen Einsteckleser gebildet wird, können die Markierungsbereiche auf der Berechtigungskarte hintereinander angeordnet sein, um sie mit einem einzigen Detektor erfassen zu können. Auch können mehrere Spuren von hintereinander angeordneten Markierungsbereichen vorgesehen sein, die von je einem Detektor oder von einem von einer Spur zu einer anderen Spur verstellbaren Detektor erfasst werden.

Eine solche Anordnung der Markierungsbereiche hintereinander und deren Erfassung mit wenigstens einem Detektor kommt z.B. dann in Betracht, wenn der Detektor die Bereiche während des Einschiebens, also während der Bewegung der Karte in Einsteckrichtung erfasst.

Die Bereiche, aus denen die Markierung besteht, sind vorzugsweise durch eine Koordinatenkombination eindeutig zuordenbar. D.h. die Markierungsbereiche können eine durch ein Koordinatensystem bestimmte Position auf der Berechtigungskarte aufweisen. Dabei kann es sich um ein kartesianisches Koordinatensystem handeln, bei dem die Ordinate in Einsteckrichtung der Karte verläuft und die Abszisse senkrecht dazu.

Zur Erfassung der Bereiche, deren Position durch das Koordinatensystem festgelegt ist, können ein oder mehrere Detektoren vorgesehen sein.

Der Ausgangspunkt des Koordinatensystems kann beispielsweise durch einen Anschlag für die Karte in der Leseeinrichtung beim Einstecken der Karte in die Leseeinrichtung gebildet sein oder durch die maschinenlesbaren Zugangberechtigungsdaten der Karte, also z.B. den Barcode auf der Karte festgelegt werden. Der oder die Detektoren können dann getriggert werden, wenn die Karte den Anschlag erreicht hat oder der Barcode oder die sonstigen maschinenlesbaren Daten auf der Berechtigungskarte von der Leseeinrichtung erfasst worden sind.

Dabei kann für jeden eindeutig zuordenbaren Bereich der Markierung ein Detektor vorgesehen sein.

Die Markierung kann aus wenigstens einen Bereich bestehen, der mit dem Detektor erfassbar ist und/oder wenigstens einen Bereich, der mit dem Detektor nicht erfassbar ist, also einen leeren Bereich darstellt. Jeder erfassbare bzw. nicht erfassbare Bereich bildet damit eine binäre Koordinatenkombination. Wenn z.B. drei Detektoren vorgesehen sind, die drei Markierungsbereiche erfassen können, bestehen damit acht verschiedene Kombinationen der Anordnung von "aktiven" Bereichen, also mit dem Detektor erfassbaren Bereichen bzw. Leerbreichen, bei vier Detektoren sechzehn verschiedene Kombinationen usw.

Die jeweils gültige Kombination stellt die im Speicher abgelegte gültige Markierung dar, sodass die Zugangskontrollvorrichtung den Zugang nur bei Übereinstimmung der erfassten Kombination mit der abgespeicherten Kombination freigibt.

Statt feststehender Detektoren ist es auch möglich, den bzw. die Detektoren verstellbar anzuordnen. Es kann also beispielsweise ein Detektor vorgesehen sein, der quer zur Karteneinsteckrichtung und/oder in Karteneinsteckrichtung verstellbar ausgebildet ist, um die aktiven und Leerbereiche der Markierung auf der Karte an den vorgegebenen Stellen des Koordinatensystems zu erfassen, oder mehrere quer und/oder in Karteneinsteckrichtung verstellbare Detektoren.

Der oder die Detektoren können dazu auch als Zeilenscanner ausgebildet sein. Auch ist es möglich, eine Digitalkamera als Detektor zu verwenden.

Die Lichtquelle zum Bestrahlen der für das bloße Auge bei sichtbarem Licht nicht sichtbaren Markierung kann eine IR-oder UV-Lichtquelle sein. Das luminiszierende Farbmittel kann dabei ein im UV luminiszierendes, insbesondere ein UVfluoreszierendes Farbmittel sein.

Nachstehend ist die Erfindung anhand der beigefügten Zeichnung beispielhaft näher erläutert. Darin zeigen:
Figur 1 eine perspektivische Ansicht eines Zugangskontrollsystems mit einem Kartenkontrollgerät und einer Zugangskontrollvorrichtung;
Figur 2 einen Schnitt durch das Kartenkontrollgerät entlang der Linie II-II in Figur 1; und
Figur 3 und 4 jeweils eine Draufsicht auf eine Zugangsberechtigungskarte nach einer ersten und einer zweiten Ausführungsform.

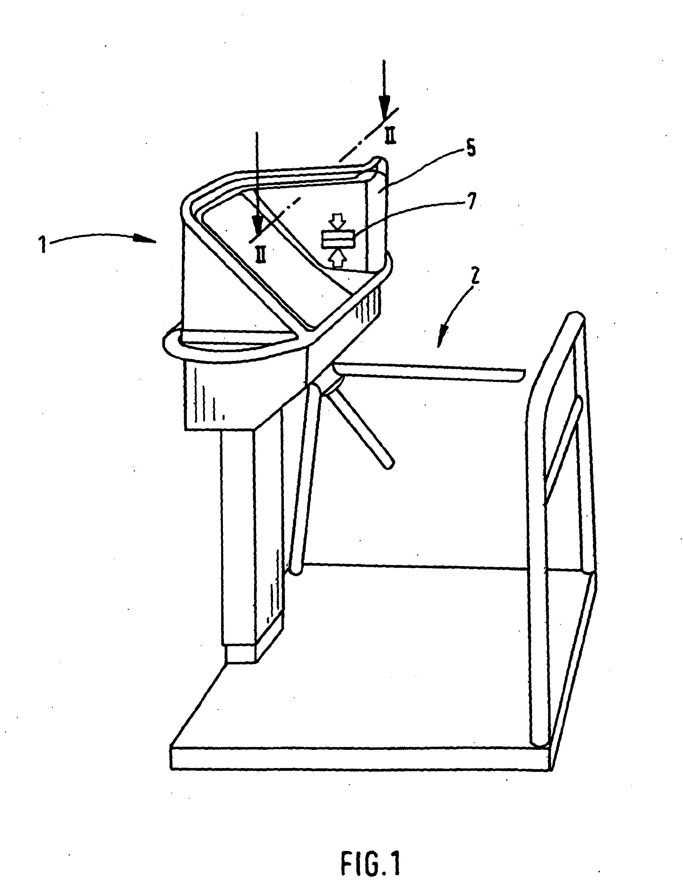

Gemäß Figur 1 weist das Zugangskontrollsystem ein Kartenkontrollgerät 1 und eine als Drehsperre ausgebildete Zugangskontrollvorrichtung 2 auf.

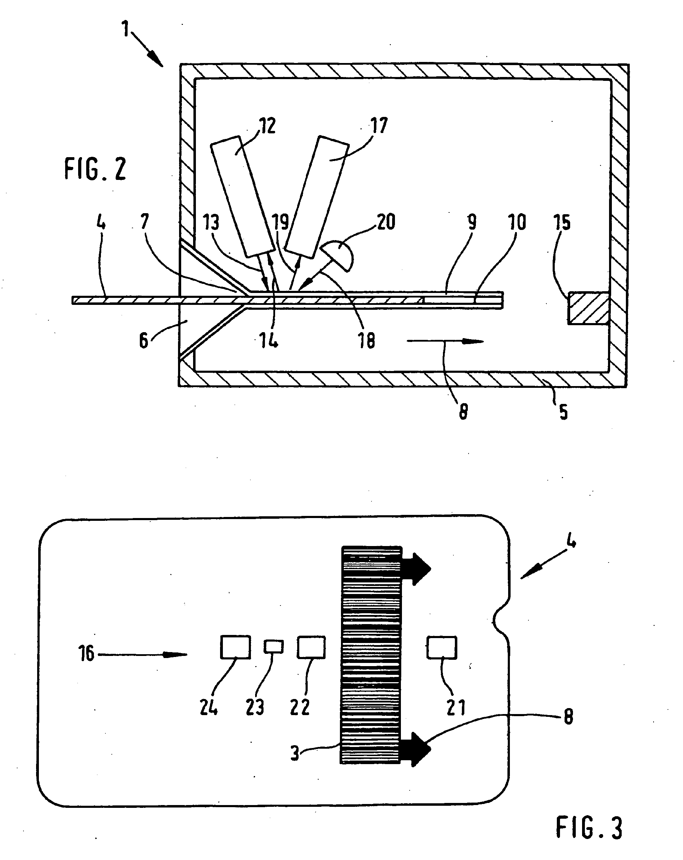

Das Kartenkontrollgerät 1 ist zum Lesen der Zugangsberechtigungsdaten ausgebildet, die als Barcode 3 auf der Berechtigungskarte 4 abgelegt sind (Figur 3).

Das Kartenkontrollgerät 1 weist gemäß Figur 1 und 2 ein Gehäuse 5 auf, das an seiner Vorderseite am Ende eines sich trichterförmig verjüngenden Maules 6 eine schlitzförmige Einstecköffnung 7 aufweist. Die Einsteckrichtung ist auf der Barcodekarte 4 durch die Pfeile 8 gekennzeichnet.

Zur Führung der Karte 4 in dem Gehäuse 5 sind Führungsschienen mit Führungsnuten beiderseits der Karte 4 vorgesehen, wobei in Figur 2 nur die eine Führungsschiene 9 mit der Führungsnut 10 in dem Gehäuse 5 zu sehen ist. In die Führungsnuten 10 greift die Karte 4 mit ihren beiden Längskanten ein, wenn sie entsprechend dem Pfeil 8 in das Gehäuse 5 geschoben wird.

Im Innenraum des Gehäuses 5 ist hinter dem Einsteckschlitz 7 eine Leseeinrichtung 12 zum Lesen der Barcodes 3 auf der Karte 4 vorgesehen. Die Leseeinrichtung 12 weist dazu ein z. B. durch LEDs gebildete Lichtquelle auf, deren Licht entsprechend dem Pfeil 13 als eine quer zur Einsteckrichtung 8 verlaufende Abtastzeile auf den Barcode 3 fällt. Das Licht der Abtastzeile wird gemäß dem Pfeil 14 zu einem optisch-elektrischen Wandler in der Leseeinrichtung 12 reflektiert.

Gemäß Figur 3 weist die Berechtigungskarte 4 außerdem mehrere Bereiche 21 bis 24 verteilte Markierung 16 auf, die durch ein mit bloßem Auge nicht sichtbares Farbmittel gebildet wird, das im UV-Licht fluoresziert. Zum Erfassen der Markierung 16 ist im Innenraum des Gehäuses 5 ein Detektor 17 vorgesehen, ferner eine UV-Lichtquelle 20, deren UV-Licht entsprechend dem Pfeil 18 auf die Karte 4 fällt, wobei das von den fluoreszierenden Markierungsbereichen 21 bis 24 emittierte Licht gemäß dem Pfeil 19 auf den Detektor 17 fällt.

Mit einem Anschlag 15 im Gehäuse 5 wird der Einschiebeweg der Berechtigungskarte 4 begrenzt.

Die Markierungsbereiche 21 bis 24 weisen eine unterschiedliche Größe und damit Strahlungsintensität auf. Der Detektor 17 ist daher so ausgebildet, dass er auch die unterschiedliche Strahlungsintensität erfassen kann. Auch können die Bereiche 21 bis 24 unterschiedliche Abstände voneinander aufweisen. Das so gebildete Intensitätsmuster ist in einem Speicher der Elektronik des Kartenkontrollgeräts 1 abgelegt. Wenn das von dem Detektor 17 erfasste Muster beim Einstecken der Karte 4 in das Kartenkontrollgerät 1 mit dem abgelegten Muster übereinstimmt, liegt eine gültige Markierung vor.

Zugleich werden beim Einstecken der Karte 4 in das Kartenkontrollgerät 1 die Zugangsberechtigungsdaten aus dem Barcode 3 ausgelesen.

Die Signale der Barcode-Leseeinrichtung 12 und des Markierungsdetektors 17 werden der Elektronik des Kartenkontrollgeräts 1 zugeführt. Falls mit der Leseeinrichtung 12 aus dem Barcode 3 eine gültige Zugangsberechtigung ausgelesen und gleichzeitig mit dem Detektor 17 eine gültige Markierung 16 festgestellt worden ist, gibt die Zugangskontrollvorrichtung 2 den Zugang frei. Dazu kann die als Drehsperre ausgebildete Zugangskontrollvorrichtung mit einem Motor oder dergleichen Aktuator betätigbar sein, der von der Elektronik des Kartenkontrollgeräts 1 beim Lesen einer gültigen Zugangsberechtigung mit der Leseeinrichtung 12 und Erfassen einer gültigen Markierung 16 mit dem Detektor 17 zur Freigabe des Zugangs angesteuert wird.

Wenn die Zugangskontrollvorrichtung 12 durch eine Drehsperre mit lediglich einem oder zwei Sperrarmen gebildet wird, ist es auch möglich, dass sie in der Grundstellung den Zugang freigibt, ihn jedoch sperrt, wenn mit der Leseeinrichtung 12 keine gültige Zugangsberechtigung und/oder mit dem Detektor 17 keine gültige Markierung 16 erfasst wird.

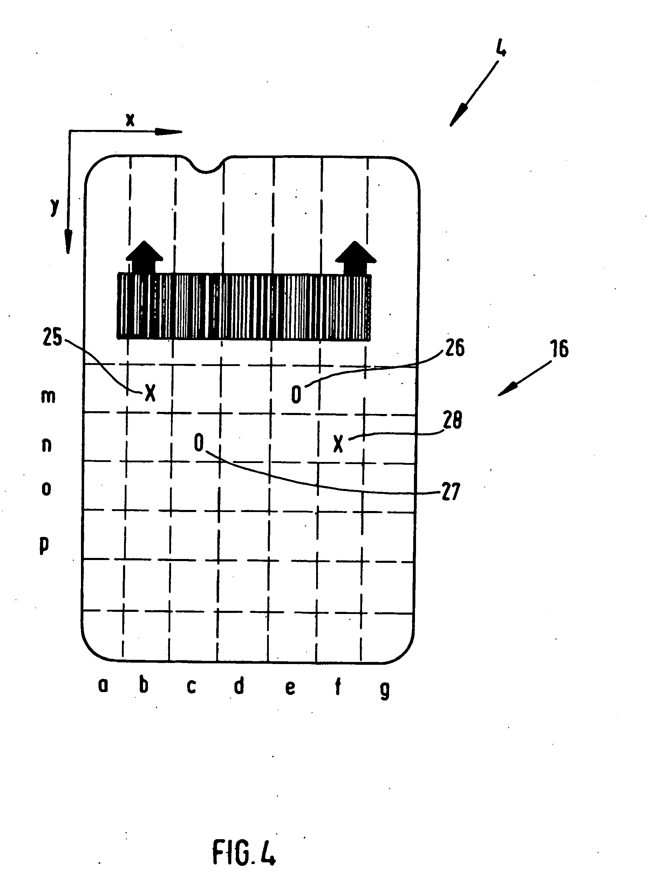

Bei der Ausführungsform der Figur 4 ist die Karte 4 durch ein kartesianisches Koordinatensystem in einzelne Bereiche aufgeteilt, mit der Einsteckrichtung als Ordinate oder y-Achse und der dazu senkrechten Richtung als Abszisse oder x-Achse. Das Koordinatensystem, das in der Zeichnung gestrichelt angedeutet ist, ist auf der Karte 4 normalerweise nicht sichtbar. Bei dem dargestellten Beispiel können vier Detektoren vorgesehen sein, die beispielsweise die Bereiche 25 bis 28 erfassen. Dabei sind die Bereiche 25 und 28 aktiv, d.h. sie fluoreszieren im UV-Licht, während die Bereiche 26 und 27 Leerbereiche darstellen, die nicht fluoreszieren. Damit besteht durch die unterschiedliche Ausbildung der vier Bereiche 25 bis 28 als fluoreszierende bzw. nicht fluoreszierende Bereiche, die Möglichkeit, die Markierung 16 in sechzehn verschiedenen Kombinationen auszubilden.

D.h. die Markierung 16 besteht aus einem Muster aus mit einem Detektor erfassbaren Bereichen 25, 28 und nicht erfassbaren Bereichen 26, 27, wobei jeder Bereich 25 bis 28 durch eine Koordinatenkombination b-m, e-m, c-n bzw. f-n festgelegt wird.

Die Anzahl der Kombinationsmöglichkeiten kann außerdem dadurch wesentlich erhöht werden, wenn die Detektoren verstellbar sind, also nicht nur z.B. die Bereiche 25 bis 28 in den Zeilen m und n bzw. den Spalten b, c, e und f erfassen können, sondern so verstellt werden können, dass sie jede beliebige Position in der Zeile m bis p bzw. Spalte a bis g auf der Berechtigungskarte 4 erfassen können.

D.h. das in Figur 4 dargestellte Muster 16 der Bereiche 25 bis 28 kann z.B. Gültigkeit für den Zutritt zu einer bestimmten Veranstaltung besitzen, während für eine andere Veranstaltung ein anderes Muster der Markierung 16 auf der Berechtigungskarte 4 festgelegt wird und die Detektoren dazu entsprechend verstellt werden.

## Patentansprüche

1. Zugangskontrollsystem mit einem Kartenkontrollgerät (1) für eine mit maschinenlesbaren Zugangsberechtigungsdaten versehene Berechtigungskarte (4) und mit einer Leseeinrichtung (12) zum Lesen der Zugangsberechtigungsdaten, sowie mit einer Zugangskontrollvorrichtung (2), die von dem Kartenkontrollgerät (1) angesteuert wird, wobei die Berechtigungskarte (4) zur Authentifizierung mit einer Markierung (16) versehen ist, die für das bloße Auge nicht erkennbar, jedoch mit mindestens einem Detektor (17) erfassbar ist, mit dem das Kartenkontrollgerät (1) versehen ist, wobei die Zugangskontrollvorrichtung (2) den Zugang nur freigibt, wenn mit der Leseeinrichtung (12) eine gültige Zugangsberechtigung gelesen und gleichzeitig mit dem wenigstens einen Detektor (17) eine gültige Markierung (16) erfasst worden ist, **dadurch gekennzeichnet, dass** die Markierung (16) zur Authentifizierung der Berechtigungskarte (4) durch ein Farbmittel gebildet wird, das über mehrere getrennte Bereiche (21 bis 24, 25 bis 28) verteilt auf der Berechtigungskarte (4) aufgetragen ist und für das bloße Auge nur dann sichtbar ist, wenn es mit Licht aus einem nicht sichtbaren Wellenlängenbereich bestrahlt wird, wobei dem wenigstens einen Detektor (17) eine Lichtquelle (20) für das Licht aus dem nicht sichtbaren Wellenlängenbereich zugeordnet ist und der Detektor (17) das durch Bestrahlung mit der Lichtquelle (20) sichtbare Farbmittel erfasst.

2. Zugangskontrollsystem nach Anspruch 1, **dadurch gekennzeichnet, dass** das Kartenkontrollgerät (1) ein Gehäuse (5) mit einer schlitzförmigen Einstecköffnung (7) zum Einstecken der Berechtigungskarte (4) aufweist.

3. Zugangskontrollsystem nach Anspruch 1, **dadurch gekennzeichnet, dass** die für das bloße Auge nicht erkennbare Markierung (16) aus einem Muster aus durch Koordinatenkombination festgelegten Bereichen (25 bis 28) besteht, die, wenn sie mit dem Farbmittel versehen sind, mit dem wenigstens einem Detektor (17) erfassbar sind.

4. Zugangskontrollsystem nach Anspruch 3, **dadurch gekennzeichnet, dass** für jeden durch eine Koordinatenkombination eindeutig zuordenbaren Bereich (25 bis 28) ein Detektor (17) vorgesehen ist.

5. Zugangskontrollsystem nach Anspruch 3 oder 4, **dadurch gekennzeichnet, dass** der bzw. jeder Detekor (17) verstellbar angeordnet ist.

6. Zugangskontrollsystem nach Anspruch 5, **dadurch gekennzeichnet**, der bzw. jeder Detektor (17) quer und/oder in Karteneinsteckrichtung verstellbar ist.

7. Zugangskontrollsystem nach Anspruch 6, **dadurch gekennzeichnet, dass** der bzw. jeder Detektor (17) als Zeilenscanner ausgebildet ist.

8. Zugangskontrollsystem nach Anspruch 1, **dadurch gekennzeichnet, dass** der Detektor (17) als Digitalkamera ausgebildet ist.

9. Zugangskontrollsystem nach einem der vorstehenden Ansprüche, **dadurch gekennzeichnet, dass** mehrere Markierungsbereiche (21 bis 24) mit einer unterschiedlichen Strahlungsintensität vorgesehen sind.

10. Zugangskontrollsystem nach einem der vorstehenden Ansprüche, **dadurch gekennzeichnet, dass** die Markierungsbereiche (21 bis 24) in Einsteckrichtung (8) hintereinander angeordnet sind.

11. Zugangskontrollsystem nach Anspruch 1, **dadurch gekennzeichnet, dass** der wenigstens eine Detektor (17) nur das Licht einer bestimmten Wellenlänge erfasst.

12. Zugangskontrollsystem nach Anspruch 1, **dadurch gekennzeichnet, dass** das Licht aus dem nicht sichtbaren Wellenlängenbereich UV- oder IR-Licht ist und das Farbmittel ein im UV- oder IR-Licht fluoreszierendes Farbmittel ist.

## Claims

1. An access control system having a card control device (1) for an authorization card (4) provided with machine-readable access authorization data and having a reading device (12) for reading the access authorization data, and having an access control apparatus (2) which is driven by the card control device (1), the authorization card (4) being provided, for authentication, with a marking (16) which is not recognizable to the naked eye but detectable by at least one detector (17) with which the card control device (1) is provided, the access control apparatus (2) releasing access only when a valid access authorization has been read by the reading device (12) and at the same time a valid marking (16) has been detected by the at least one detector (17), **characterized in that** the marking (16) for authentication of the authorization card (4) is constituted by a colorant which is applied to the authorization card (4) so as to be distributed over a plurality of separate areas (21 to 24, 25 to 28) and is visible to the naked eye only when it is irradiated with light from an invisible wavelength range, the at least one detector (17) having associated therewith a light source (20) for the light from the invisible wavelength range, and the detector (17) detecting the colorant visible through irradiation with the light source (20).

2. The access control system according to claim 1, **characterized in that** the card control device (1) has a housing (5) with a slot-shaped insertion opening (7) for insertion of the authorization card (4).

3. The access control system according to claim 1, **characterized in that** the marking (16) not recognizable to the naked eye consists of a pattern of areas (25 to 28) defined by coordinate combination which are detectable by the at least one detector (17) when they are provided with the colorant.

4. The access control system according to claim 3, **characterized in that** a detector (17) is provided for each area (25 to 28) uniquely mappable by a coordinate combination.

5. The access control system according to claim 3 or 4, **characterized in that** the, or each, detector (17) is disposed in adjustable fashion.

6. The access control system according to claim 5, **characterized in that** the, or each, detector (17) is adjustable transversely and/or in the card insertion direction.

7. The access control system according to claim 6, **characterized in that** the, or each, detector (17) is configured as a line scanner.

8. The access control system according to claim 1, **characterized in that** the detector (17) is configured as a digital camera.

9. The access control system according to any of the above claims, **characterized in that** a plurality of marking areas (21 to 24) with a different radiation intensity are provided.

10. The access control system according to any of the above claims, **characterized in that** the marking areas (21 to 24) are disposed one behind the other in the insertion direction (8).

11. The access control system according to claim 1, **characterized in that** the at least one detector (17) detects only the light of a certain wavelength.

12. The access control system according to claim 1, **characterized in that** the light from the invisible wavelength range is UV light or IR light and the colorant is a colorant fluorescent in UV light or IR light.

## Revendications

1. Système de contrôle d'accès avec un appareil de lecture de carte (1) pour une carte d'autorisation (4) pourvue de données d'autorisation d'accès lisibles par machine et avec un dispositif de lecture (12) pour lire les données d'autorisation d'accès, ainsi qu'avec un dispositif de contrôle d'accès (2) qui est piloté par l'appareil de contrôle de carte (1), la carte d'autorisation (4) étant pourvue d'un marquage (16) pour l'authentification, lequel n'est pas reconnaissable à l'oeil nu mais est détectable par au moins un détecteur (17) dont est pourvu l'appareil de contrôle de carte (1), le dispositif de contrôle d'accès (2) ne libérant l'accès que si une autorisation d'accès valable est lue avec le dispositif de lecture (12) et en même temps, un marquage (16) valable est détecté par ledit au moins un détecteur (17), **caractérisé en ce que** le marquage (16) destiné à l'authentification de la carte d'autorisation (4) est formé par un colorant qui est appliqué de manière répartie sur plusieurs zones (21 à 24, 25 à 28) séparées sur la carte d'autorisation (4) et qui n'est visible à l'oeil nu que s'il est irradié par la lumière d'un domaine spectral invisible, une source lumineuse (20) pour la lumière du domaine spectral invisible étant associée audit au moins un détecteur (17) et le détecteur (17) détectant le colorant visible par irradiation avec la source lumineuse (20).

2. Système de contrôle d'accès selon la revendication 1, **caractérisé en ce que** l'appareil de contrôle de carte (1) présente un boîtier (5) avec une ouverture d'insertion (7) en forme de fente pour insérer la carte d'autorisation (4).

3. Système de contrôle d'accès selon la revendication 1, **caractérisé en ce que** le marquage (16) non reconnaissable à l'oeil nu est constitué par un dessin formé par des zones (25 à 28) qui sont définies par combinaison de coordonnées et qui, lorsqu'elles sont pourvues du colorant, sont détectables au moyen dudit au moins un détecteur (17).

4. Système de contrôle d'accès selon la revendication 3, **caractérisé en ce qu'**un détecteur (17) est prévu pour chaque zone (25 à 28) susceptible d'être associée de manière évidente par une combinaison de coordonnées.

5. Système de contrôle d'accès selon la revendication 3 ou 4, **caractérisé en ce que** le ou chaque détecteur (17) est agencé de manière à pouvoir être déplacé.

6. Système de contrôle d'accès selon la revendication 5, **caractérisé en ce que** le ou chaque détecteur (17) peut être déplacé transversalement à la direction d'insertion de carte et/ou dans la direction d'insertion de carte.

7. Système de contrôle d'accès selon la revendication 6, **caractérisé en ce que** le ou chaque détecteur (17) est réalisé sous forme de scanner linéaire.

8. Système de contrôle d'accès selon la revendication 1, **caractérisé en ce que** le détecteur (17) est réalisé sous forme de caméra numérique.

9. Système de contrôle d'accès selon l'une quelconque des revendications précédentes, **caractérisé en ce qu'**il est prévu plusieurs zones de marquage (21 à 24) avec une intensité de rayonnement différente.

10. Système de contrôle d'accès selon l'une quelconque des revendications précédentes, **caractérisé en ce que** les zones de marquage (21 à 24) sont agencées les unes derrière les autres en direction d'insertion (8).

11. Système de contrôle d'accès selon la revendication 1, **caractérisé en ce que** ledit au moins un détecteur (17) détecte seulement la lumière d'une longueur d'onde déterminée.

12. Système de contrôle d'accès selon la revendication 1, **caractérisé en ce que** la lumière du domaine spectral invisible est de la lumière UV ou de la lumière IR et le colorant est un colorant fluorescent à la lumière UV ou à la lumière IR.
